# EUROPEAN PATENT APPLICATION

(11) **EP 1 246 343 A2**
(43) Date of publication of application: **02.10.2002**
(21) Application number: 02007040.5
(22) Date of filing: 27.03.2002
(51) Int. Cl.: H02K 3/52

(54) **Connections of salient pole windings**

(30) Priority: 29.03.2001 JP 2001095418
(71) Applicant: MITSUBISHI DENKI KABUSHIKI KAISHA, Tokyo 100-8310 (JP)
(72) Inventor: Miyake, Nobuaki, Chiyoda-ku, Tokyo 100-8310 (JP); Nakahara, Yuji, Chiyoda-ku, Tokyo 100-8310 (JP); Hashiguchi, Naoki, Chiyoda-ku, Tokyo 100-8310 (JP); Takai, Keiji, Chiyoda-ku, Tokyo 100-8310 (JP)
(74) Representative: Popp, Eugen, Dr.

(57) **Abstract**

A stator 20 includes a core 18 having the ends of a plurality of core pieces 11 formed into a ring by rotation of connecting portions in the form of a recess and projection 11b and 11c, a plurality of electrically insulating members 15 which are disposed around the magnetic pole teeth 11a of the core 18, a plurality of windings 16 which are wrapped around the electrically insulating members 15 and connected with each other by crossover wires 17, and a frame 19 which surrounds the core 18 and holds the outer periphery of the core 18 with its inner peripheral surface 19a. The recesses and projections 11 b and 11c of the core 18 are formed in a position spaced inwards from the inner peripheral surface 19a of the frame 19 by a prescribed distance L, and the crossover wires 17 which connect the windings 16 pass in the vicinity of the recesses and projections 11b and 11c.

## Description

### Background of the Invention

### 1. Field of the Invention

This invention relates to a stator which constitutes a principal portion of an elevator drive motor or the like, for example.

### 2. Description of the Related Art

A conventional stator of this type is disclosed in Japanese Published Unexamined Patent Application Hei 8-19196, for example. It is constituted as described below.

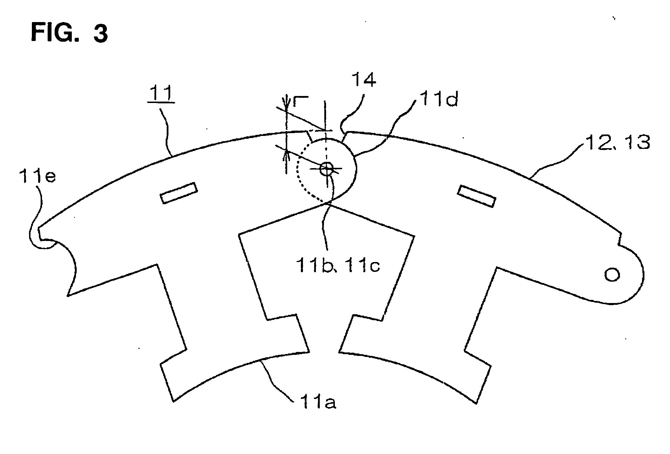

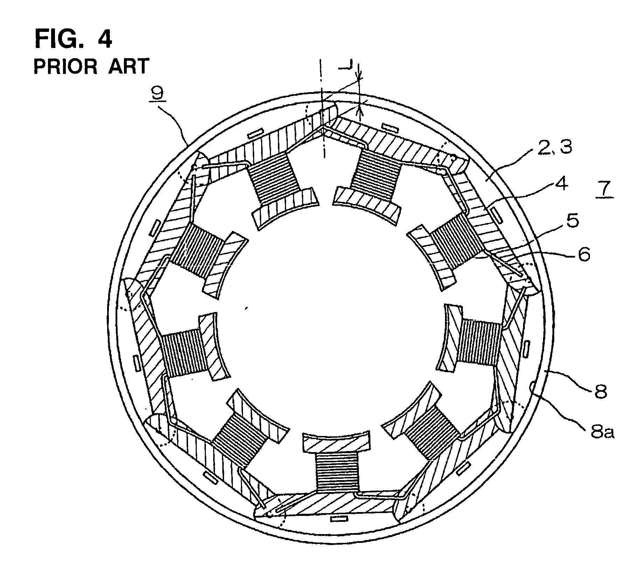

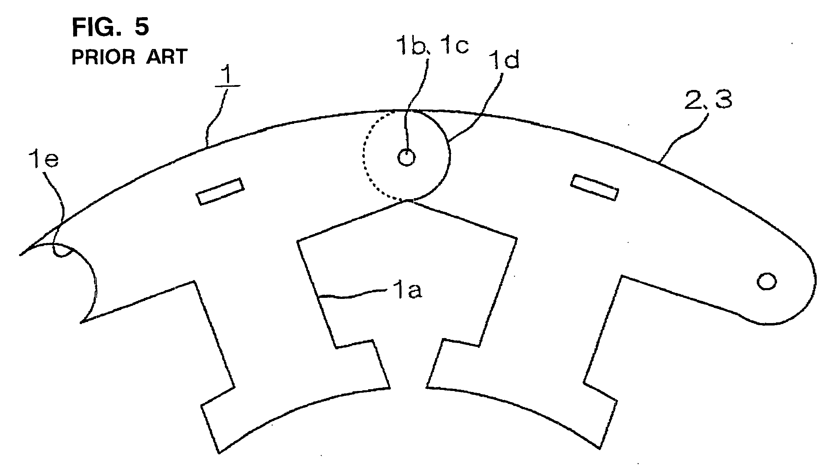

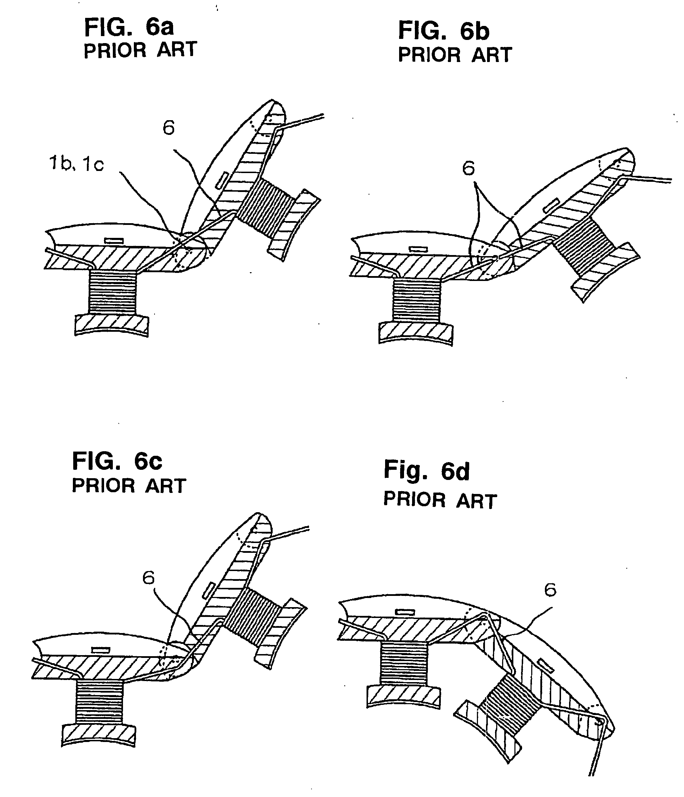

Figure 4 is a front view schematically showing the structure of a conventional stator. Figure 5 is a front view showing the structure of a core in Figure 4. Figures 6a to 6d are views for explaining a problem of crossover wires for the windings of Figure 3.

In the figures, 1 is a plate-shaped core piece made of a magnetic material. A magnetic pole tooth 1a projects from one side thereof, and connecting portions in the form of a recess 1b and a projection 1c are formed on the rear and front surface of one end. A first end surface 1d at the one end is formed in the shape of a circular arc centered on the center of the recess and projection 1b and 1c. A second end surface 1e which can mate with the first end surface 1d of an adjoining core piece 1 is formed on the other end. 2 is a first core member in which a plurality of core pieces 1 are arranged through the end surfaces 1d and 1e. 3 is a second core member in which the core pieces are arranged in the opposite direction from in the first core member 2. It is alternatingly stacked with the first core member 2, and the recesses and projections 1b and 1c of core pieces 1 adjoining in the stacking direction mate with each other to permit pivoting.

4 is a plurality of electrically insulating members which are disposed surrounding the magnetic pole teeth 1a. 5 is a plurality of windings which are disposed around each of the electrically insulating members 4. Although not shown in the drawings, the core pieces 1 are pivoted by pivoting of the recesses and projections 1b and 1c, and winding is carried out with the core members 2 and 3 in a linear state, and the windings are connected by crossover wires 6. 7 is a core which is formed by pivoting the core pieces 1 of the core members 2 and 3 on which the windings 5 have been formed back to their original shape to form a ring. 8 is a frame which is disposed so as to surround the core 7 and which holds the outer periphery of the core 7 with its inner peripheral surface 8a. 9 is a stator which is constituted by elements 1 through 8. The crossover wires 6 which are connected between the windings 5 pass along the end surfaces in the stacking direction of the core 7, and they are installed in a location which is separated from the inner peripheral surface 8a of the frame 8 in the inwards direction by a distance L which is prescribed by regulatory laws on electrical equipment.

In a conventional stator 9 which is constructed in the above-described manner, crossover wires 6 which connect windings 5 with each other pass through a location spaced inwards from the inner peripheral surface 8a of the frame 8 by a prescribed distance. After the core members 2 and 3 are pivoted backwards and winding is carried out, they are returned to their initial shape and form a ring. At this time, the core pieces 1 pivot about the centers of the connecting portions in the form of the recesses and projections 1b and 1c, so when the crossover wires 6 are installed so as to pass on the outer side of the recesses and projections 1b and 1c as shown in Figure 6a, in the step in which the core pieces 1 are returned to their original position, as shown in Figure 6b, the crossover wires 6 may be pulled on and break, or in the case in which the crossover wires 6 are installed so as to pass on the inner side of the recesses and projections 1b and 1c as shown in Figure 6c, when the core pieces 1 are returned to their original positions, the crossover wires 6 slacken as shown in Figure 6d, so the windings on the magnetic pole teeth slacken and approach the frame 8, and there was the problem that the reliability of electrical insulation decreased.

### Summary of the Invention

This invention was made in order to solve problems like those described above. Its object is to provide a stator which can prevent breakage of crossover wires connecting windings or a decrease in the reliability of electrical insulation, and which can improve reliability.

A stator according to this invention is one comprising a core in which a plurality of core pieces have their ends connected to each other to form the shape of a ring. Each core piece has a magnetic pole tooth which projects nearly perpendicularly to the direction of connecting, connecting portions which are formed on one of the ends, a first end surface which is formed at the one of the ends in the shape of a circular arc centered on the connecting portions, and a second end surface which is formed at the other end and which can mate with the first end surface of an adjoining core piece. Also provided are a first core member having the cores arranged in the shape of a strip through the end surfaces and a second core member having the core pieces arranged in the shape of a strip in the opposite direction from the direction of connection of the first core member being stacked such that ends which adjoin each other in the stacking direction of the core pieces overlap each other. The connecting portions are connected so as to be able to rotate and the core members are formed into the ring shape with the magnetic pole teeth on the interior to form the core. Further provided are a plurality of electrically insulating members which surround the magnetic pole teeth of the core, a plurality of windings which are wound around the electrically insulating members and which are connected by crossover wires, and a frame which is disposed around the core and which holds the outer periphery of the core with its inner peripheral surface. The connecting portions are formed in a location spaced inwards from the inner peripheral surface of the frame by just a prescribed distance, and the crossover wires which connect the windings pass in the vicinity of the connecting portions.

Therefore, a stator can be provided which can prevent breakage of crossover wires connecting windings or a decrease in the electrical insulating properties of windings and which can improve reliability.

A guide portion which projects to the vicinity of the connecting portions and guides the crossover wires with its tip surface may be formed on the electrically insulating members.

A cutout which straddles the ends of adjoining core pieces in the connecting direction may be formed on the outer peripheral side of the connecting portions of the core.

### Brief Description of the Drawings

Figure 1 is a front view showing the structure of a stator according to a first embodiment of this invention.
Figure 2 is a detailed view showing the structure of portions of the stator of Figure 1.
Figure 3 is a detailed view showing the structure of portions of a core of the stator of Figure 1.
Figure 4 is a front view schematically showing the structure of a conventional stator.
Figure 5 is a front view showing the structure of the core of Figure 4.
Figure 6a to 6d are views for explaining a problem with the crossover wires for windings in Figure 4.

### Description of Preferred Embodiments

Below, embodiments of this invention will be explained based on the drawings.

### Embodiment 1

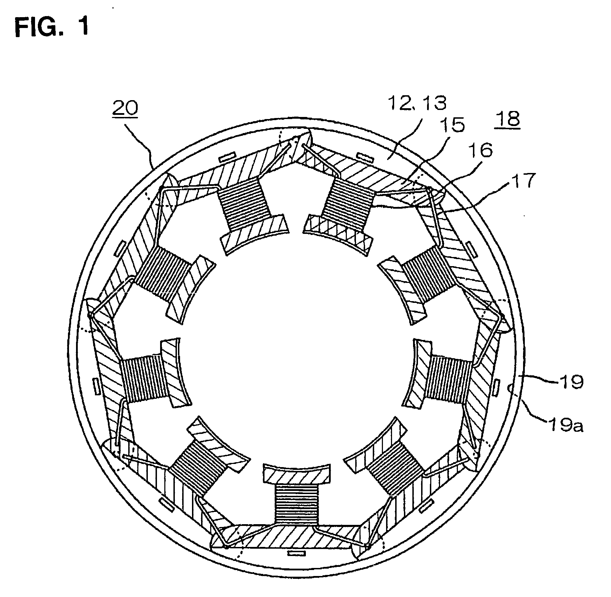

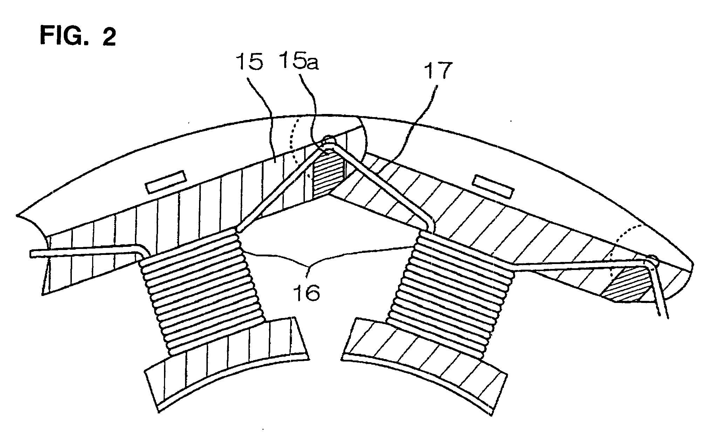

Figure 1 is a front view showing the structure of a stator in a first embodiment of this invention, Figure 2 is a detailed view showing the structure of essential portions of the stator of Figure 1, and Figure 3 is a detailed view showing the structure of essential portions of a core of the stator of Figure 1.

In the figures, 11 is a plate-shaped core piece made of a magnetic material. A magnetic pole tooth 11a projects from its inner side, and connecting portions in the form of a recess 11b and a projection 11c are formed on the rear and front surfaces of one end in a position which is spaced inwardly from the outer side by just a prescribed distance L (such as at least 2.5 millimeters for ones having a rated output of greater than 0.75 kW or ones having a rated voltage of greater than 250V) which is prescribed by regulatory laws on electrical equipment. A first end surface 11d at one end is formed in the shape of a circular arc centered on the center of the recess and projection 11b and 11c. A second end surface 11e which can mate with the first end surface 11d of an adjoining core piece 11 is formed on the other end.

12 is a first core member in which a plurality of core pieces 11 are arranged through the end surfaces 11d and 11e. 13 is a second core member in which the core pieces 11 are arranged in the opposite direction from in the first core member 12. It is alternatingly stacked with the first core member 12, and the recesses and projections 11b and 11c of adjoining core pieces 11 in the stacking direction mate with each other so that they are pivotably connected. A cutout 14 which straddles the ends of core pieces 11 adjoining each other in the connecting direction is formed on the outer side of the connecting portions in the form of the recess and projection 11b and 11c.

15 is a plurality of electrically insulating members which are disposed so as to surround the magnetic pole teeth of the core pieces 11. In a portion thereof is formed a guide portion 15a which projects to the vicinity of the recess and projection 11b and 11c of the core piece 11 and guides a crossover wire for a winding to be described below with its tip. 16 is a plurality of windings which are provided around each electrically insulating member 15. Although not shown in the drawings, each core piece 11 is rotated by rotating the recesses and projections 11b and 11c, and winding is carried out with the core members 12 and 13 in a linear state. The windings are connected by a crossover wire 17 which is guided by the tip of the guide portion 15a of the electrically insulating member 15 and passes in the vicinity of the recess and projection 11b and 11c. 18 is a core which is formed by rotating the core pieces 11 of the core members 12 and 13 on which the windings 16 have been formed to return them to their original position, and then combining a plurality of pairs into the shape of a ring. 19 is a frame which surrounds the core 18 and which holds the outer periphery of the core 18 with its inner peripheral surface 19a. Elements 11-19 form a stator 20.

In this manner, according to this first embodiment, the connecting portions in the form of the recess and projection 11b and 11c are disposed inwards from the outer side of the core piece 11, i.e., inwards from the inner peripheral surface of the frame 19 by just a distance L which is prescribed by regulatory laws on electrical equipment, and a crossover wire 17 which connects the windings 16 passes in the vicinity of the recess and projection 11b and 11c. Therefore, even when the core pieces 11 are rotated by the rotation of the recess and projection 11b and 11c, the distance from the center of rotation to the adjoining windings 16 does not change, so it is possible to prevent breakage of the crossover wire 17 connecting the windings 16 due to their being pulled or a decrease in the reliability of electrical insulation due to slackening of a crossover wire 17 which allows the windings 16 to relax and approach the frame 19, so an increase in reliability can be achieved.

In addition, the guide portion 15a which projects to the vicinity of the recess and projection 11b and 11c and which guides the crossover wire 17 with its tip portion is formed on the electrically insulating member 15, so it is possible to easily arrange the crossover wire 17 in the vicinity in the connecting portions, so the ease of assembly can be improved. In addition, a cutout 14 which straddles the ends of adjoining core pieces 11 in the connecting direction is formed on the outer side of the recess and projection 11b and 11c, so by rotating the recess and projection 11b and 11c, the core members 12 and 13 can be further bent beyond a linear state, i.e., they can be rotated backwards, so the winding operation of the winding 16 can be made easier, and the ease of assembly can be improved.

As described above, according to this invention, a stator comprises a core in which a plurality of core pieces have their ends connected to each other to form the shape of a ring, each core piece having a magnetic pole tooth which projects nearly perpendicularly to the direction of connecting, connecting portions which are formed on one of the ends, a first end surface which is formed at the one of the ends in the shape of a circular arc centered on the connecting portions, and a second end surface which is formed at the other end and which can mate with the first end surface of an adjoining core piece, a first core member having the cores arranged in the shape of a strip through the end surfaces and a second core member having the core pieces arranged in the shape of a strip in the opposite direction from the direction of connection of the first core member being stacked such that ends which adjoin each other in the stacking direction of the core pieces overlap each other, the connecting portions being connected so as to be able to rotate and the core members being formed into the ring shape with the magnetic pole teeth on the interior to form the core. The stator further comprises a plurality of electrically insulating members which surround the magnetic pole teeth of the core, a plurality of windings which are wound around the electrically insulating members and which are connected by crossover wires, and a frame which is disposed around the core and which holds the outer periphery of the core with its inner peripheral surface, and the connecting portions are formed in a location spaced inwards from the inner peripheral surface of the frame by just a prescribed distance, and the crossover wires which connect the windings pass in the vicinity of the connecting portions. Therefore, a stator can be provided which can prevent breakage of crossover wires connecting windings or a decrease in the electrical insulating properties of windings and which can improve reliability.

Also, a guide portion which projects to the vicinity of the connecting portions and guides the crossover wires with its tip surface is formed on the electrically insulating members, so that a stator can be provided which can of course increase reliability and which can also increase the ease of assembly.

Also, a cutout which straddles the ends of adjoining core pieces in the connecting direction is formed on the outer peripheral side of the connecting portions of the core, so that a stator can be provided which can of course increase reliability and which can also increase the ease of assembly.

## Claims

1. A stator comprising:
a core in which a plurality of core pieces have their ends connected to each other to form the shape of a ring, each core piece having a magnetic pole tooth which projects nearly perpendicularly to the direction of connecting, connecting portions which are formed on one of the ends, a first end surface which is formed at the one of the ends in the shape of a circular arc centered on the connecting portions, and a second end surface which is formed at the other end and which can mate with the first end surface of an adjoining core piece, a first core member having the cores arranged in the shape of a strip through the end surfaces and a second core member having the core pieces arranged in the shape of a strip in the opposite direction from the direction of connection of the first core member being stacked such that ends which adjoin each other in the stacking direction of the core pieces overlap each other, the connecting portions being connected so as to be able to rotate and the core members being formed into the ring shape with the magnetic pole teeth on the interior to form the core,
a plurality of electrically insulating members which surround the magnetic pole teeth of the core,
a plurality of windings which are wound around the electrically insulating members and which are connected by crossover wires, and
a frame which is disposed around the core and which holds the outer periphery of the core with its inner peripheral surface,
**characterized in that** the connecting portions are formed in a location spaced inwards from the inner peripheral surface of the frame by just a prescribed distance, and the crossover wires which connect the windings pass in the vicinity of the connecting portions.

2. A stator as claimed in claim 1 **characterized in that** a guide portion which projects to the vicinity of the connecting portions and guides the crossover wires with its tip surface is formed on the electrically insulating members.

3. A stator as claimed in claim 1 **characterized in that** a cutout which straddles the ends of adjoining core pieces in the connecting direction is formed on the outer peripheral side of the connecting portions of the core.
